# EUROPÄISCHE PATENTSCHRIFT

(11) **EP 1 498 649 B1**
(45) Veröffentlichungstag und Bekanntmachung des Hinweises auf die Patenterteilung: **09.05.2007**
(21) Anmeldenummer: 04014140.0
(22) Anmeldetag: 16.06.2004
(51) Int. Cl.: F16L 1/028, E02F 5/10

(54) **Verfahren und Vorrichtung zur Herstellung einer Rohrbettung**
Method and device for providing a bedding for pipes
Procédé et appareil pour créer un support pour tuyaux

(30) Priorität: 16.07.2003 DE 10332316
(43) Veröffentlichungstag der Anmeldung: 19.01.2005
(73) Patentinhaber: Uhrig Strassen- und Tiefbau GmbH, 78187 Geisingen (DE)
(72) Erfinder: Uhrig, Thomas, 78187 Geisingen (DE)
(74) Vertreter: Müller-Boré & Partner Patentanwälte

(56) Entgegenhaltungen:
- EP-A- 1 188 865
- DE-C1- 19 940 875
- FR-A- 2 682 408
- GB-A- 1 511 985

## Beschreibung

Die vorliegende Erfindung betrifft ein Verfahren zur Herstellung einer Rohrbettung und eine Vorrichtung zum Erzeugen einer Rohrbettung.

Herstellungsverfahren für eine Rohrbettung sind aus dem Stand der Technik hinreichend bekannt: So offenbart die gattungsbildende DE 199 408 75 C1 ein Verfahren zur Herstellung einer Rohrbettung, wobei ein Graben ausgehoben wird, ein Teil des ausgehobenen und/oder an der Grabensohle anstehenden Bodens aufbereitet und verdichtet wird und daran anschließend das Rohrbett durch Profilieren des aufbereiteten und verdichteten Bodens entsprechend der Außenkontur eines zu verlegenden Rohres erzeugt wird.

Problematisch bei derartigen Herstellungsverfahren ist jedoch, daß nach Einlegen des Rohres in das Rohrbett und insbesondere durch das anschließende Verfüllen des Grabens im Bereich des im Rohrquerschnitt tiefsten bzw. untersten Punktes des Rohres erhöhte Spannungen auftreten, so daß Rohre mit einer sehr starken bzw. dicken Wandung benötigt werden, um eine ausreichende Stabilität und Sicherheit der Rohrleitung gewährleisten zu können.

In Anbetracht des obigen ist es somit Aufgabe der vorliegenden Erfindung, ein Verfahren zur Herstellung einer Rohrbettung sowie eine Vorrichtung zum Erzeugen einer Rohrbettung vorzusehen, welche ein kostengünstiges Verfahren und eine hohe Betriebssicherheit gewährleisten.

Diese Aufgabe wird durch ein Verfahren zu Herstellung einer Rohrleitung gemäß Anspruch 1 und durch eine Vorrichtung zum Erzeugen einer Rohrbettung gemäß Anspruch 7 gelöst. Bevorzugte Ausführungsformen ergeben sich aus den abhängigen Unteransprüchen.

Erfindungsgemäß ist ein Verfahren zur Herstellung einer Rohrbettung vorgesehen, umfassend folgende Schritte: Ausheben eines Grabens, Erzeugen einer Rohrbettung durch Profilieren des Bodens mit einem Profilierschild, welches eine Außenkontur aufweist, die im wesentlichen der Außenkontur eines Rohres zumindest in dem Bereich, in welchem das Rohr die Rohrbettung kontaktiert, entspricht, wobei das Profilierschild in seinem untersten, der Rohrbettung zugewandten Bereich zumindest einen Vorsprung aufweist, um in der Rohrbettung in Längsrichtung des zu verlegenden Rohres eine Rinne bzw. Vertiefung bzw. Nut auszubilden. Nach dem Ausheben des Grabens wird an der Grabensohle entsprechend der Außenkontur eines zu verlegenden Rohres eine Rohrbettung mit einem Profilierschild ausgebildet, wobei der Profilierschild insbesondere an seiner Unterseite eine Außenkontur aufweist, welche im wesentlichen der Außenkontur des Rohres zumindest in dem Bereich des Rohrs entspricht, welcher auf die Rohrbettung aufgelegt wird. Das Profilierschild weist somit an seiner Unterseite, d.h. der der Grabensohle zugewandten Seite, im wesentlichen die gleiche Außenkontur wie die Unterseite des zu verlegenden Rohres auf. Hierbei kann bei entsprechender Bodenqualität die rohrbettung direkt im Boden bzw. ausgehobenen Graben ausgebildet werden, ohne zuvor den Boden aufzubereiten oder mit einem alternativen Bodenmaterial zu versehen. Bei Böden minderer Qualität kann aber auch ein alternatives Material in den Graben eingebracht werden, in welchem anschließend die Rohrbettung ausgebildet werden kann. Sollte zumindest ein Teil des ausgehobenen und/oder an der Grabensohle anstehenden Bodens aufbereitet werden, so wird die Menge des alternativen Materials bzw. der erforderlichen Füll- bzw. Zusatzstoffe, wie Kies, Sand und Beton, minimiert, da der anstehende Boden derart aufbereitet wird, daß er zum Ausbilden der Rohrbettung verwendet werden kann.

Durch das Vorsehen eines Vorsprungs an dem Profilierschild, welcher bei einem beispielsweise im wesentlichen (teil-)kreisförmigen Profilierschild radial nach unten hervorragt bzw. bei einem mit gerader oder eckiger Außenkontur nachunten hervorragt geraden oder eckigen Profilierschild nach unten hervorragt (d. h. normal zur Grabensohle), wird durch Ziehen des Profilierschilds in Längsrichtung des zu verlegenden Rohres eine entsprechende Rinne ausgebildet, deren Querschnittsform im wesentlichen dem Vorsprung entspricht. Somit entsteht ein Bereich in der Rohrbettung, welcher nicht der Außenkontur des Rohres entspricht. Bei Einlegen des Rohres in die Rohrbettung werden somit erst die seitlichen Flanken bzw. Bereiche des Rohres belastet, wobei der Rohrbereich gegenüber der Rinne zunächst noch belastungsfrei bleibt Nach Verfüllen des Grabens und Beginnen der Setzung des Rohres kommt es zu einem Kontakt des Rohres im - nun nicht mehr vorhandenen - Rinnenbereich. Nach abgeschlossener Setzung werden sich im vormaligen Rinnenbereich Spannungen einstellen, deren Größenordnung im wesentlichen den Rohrspannungen in den angrenzenden Bereichen entspricht. Idealerweise sollte sich eine im unteren Bereich des Rohrquerschnittes betragsmäßig gleiche Spannung einstellen. In der Folge werden somit die bislang durch das herkömmliche Verfahren auftretenden Belastungs- bzw. Spannungsspitzen bzw. -maxima im unteren Bereich des Rohres vermieden.

Bevorzugterweise weist der Vorsprung des Profilierschildes eine quer zur Längsachrichtung des Rohres verlaufende Höhe auf, welche in einem Bereich zwischen dem 0,001- bis 0,5-fachen des Radius des Rohres liegt. Hierbei versteht sich als Höhe des Vorsprungs der Abstand, der sich im wesentlichen senkrecht von der Auflagefläche des Rohres zur Rohrbettung ergibt. In anderen Worten ragt der Vorsprung im wesentlichen vertikal nach unten, d.h. normal zur Grabensohle. Die Höhe des Vorsprungs - und damit die Tiefe der Rinne - ist so bemessen, daß beim Einlegen des Rohres in das Rohrbett das Rohr im Bereich der Rinne das Rohrbett zunächst nicht kontaktiert. Aufgrund des nachfolgenden Absackens bzw. Setzens des Rohres bzw. der Rohrbettung ergibt sich im Bereich der Rinne eine Anlage des Bodens mit dem Rohr. Jedoch übt die Rohrbettung im Bereich der (ursprünglichen) Rinne auf das Rohr eine geringere Kraftkomponente aus als ohne zuvor vorhandene Rinne. Die Höhe des Vorsprungs bzw. die Tiefe der Rinne ergibt sich im wesentlichen aus dem Gewicht des Rohrs, dessen Größe und dem Material der Rohrbettung. Ziel ist es jedoch immer, daß nach dem Einlegen des Rohres das Rohr die Rohrbettung im gesamten Auflagebereich kontaktiert, d.h. auch in dem Bereich in dem die Rinne ausgebildet ist, um einen gleichmäßigen Spannungsverlauf im unteren Rohrquerschnitt erlangen.

In einer weiteren bevorzugten Ausführungsform weist der Vorsprung des Profilierschildes eine quer zur Längsrichtung des zu verlegenden Rohres verlaufende Höhe auf, welche im wesentlichen halb so groß ist, wie das Setzungsmaß des Materials der Rohrbettung. Das Setzungsmaß des Materials der Rohrbettung wird im Regelfall abhängig von dem Material der Rohrbettung errechnet bzw. aus entsprechenden Tabellen entnommen. Sollte z.B. bei einem Material wie Sand das Setzungsmaß 24 mm betragen, so wird ein Profilierschild angewandt, dessen Vorsprung eine Höhe von 12 mm aufweist, um eine 12 mm tiefe Rinne in der Rohrbettung auszubilden. Beim Einlegen des Rohres in die Rohrbettung setzt sich somit das Material kontinuierlich um 24 mm, so daß nach einem Setzungsweg von 12 mm ebenfalls die Rohrbettung im Bereich der Rinne mit dem Rohr in Kontakt gelangt. Folglich übt nach dem Ende des Setzvorgangs jedoch der Bereich der (ursprünglichen) Rinne eine geringere Kraft auf das Rohr aus als die die Rinne umgebenden Bereiche der Rohrbettung. Somit ergibt sich ein gleichförmiger Spannungsverlauf in der Rohrleitung und nicht mehr Spannungsspitzen im unteren Bereich. Dadurch lassen sich die Kosten senken, da die Wandungsstärke der Rohrleitung vermindert werden kann.

Weiterhin bevorzugt ist der Vorsprung im wesentlichen halbkreisförmig ausgebildet bzw. weist eine gekrümmte Konfiguration auf. Folglich ergibt sich für die in der Rohrbettung auszubildenden Rinne eine (halb-)kreisförmige Konfiguration, d.h. die Rinne weist in ihrem zur Längsrichtung des zu verlegenden Rohres gesehenen Querschnitt eine im wesentlichen (halb-)kreisförmige Form auf. Denkbar wäre es jedoch auch, den Vorsprung dreieckig, trapezförmig oder in einer sonstigen vieleckigen Form oder elliptischen Form auszubilden. Dies ist im wesentlichen abhängig von dem für die Rohrbettung zu verwendenden Material und dem daraus resultierenden Setzungsmaß. Bevorzugterweise ist der Vorsprung halbkreisförmig mit einem Radius von 10 bis 15 mm bei Rohren mit einem Durchmesser von ca. 2,5 m, d. h. der Durchmesser des Profilierschildes vergrößert sich in diesem Bereich um 10 bis 15 mm.

In einer besonders bevorzugten Ausführungsform ist ein Verfahren vorgesehen, bei welchem das Profilierschild wenigstens ein weiteres Paar Vorsprünge aufweist, welche insbesondere symmetrisch zum ersten Vorsprung angeordnet sind. In anderen Worten ist bei einem weiteren Paar Vorsprünge jeweils ein Vorsprung links und ein weiterer Vorsprung rechts von dem ersten Vorsprung vorgesehen, so daß vorteilhafterweise die Kraftverteilung auf die Rohroberfläche beeinflußt werden kann. Somit kann vorteilhafterweise abhängig vom verwendeten Rohrtyp eine entsprechende Rohrbettung hergestellt werden.

Weiterhin bevorzugt ist ein Verfahren vorgesehen, bei welchem das Profil der Rohrbettung einen Auflagewinkel für das zu verlegende Rohr von mindestens 90° bildet. Der Auflagewinkel definiert bei einem runden Rohr den Bogenabschnitt des Rohrquerschnitts, welcher auf der Rohrbettung bzw. dem Rohrauflager aufliegt. Mit dem Auflagewinkel von 90° kann eine sichere Bettung, welche eine großflächige Kraftübertragung von dem Rohr auf die Bettung ermöglicht, gebildet werden. Auf diese Weise werden auftretende Spannungen minimiert oder vermieden. Je nach Größe des zu verlegenden Rohres und der Umgebungsbedingungen kann auch ein größerer Auflagewinkel bis zu 180° verwendet werden, d.h. die Rohrbettung verläuft bis zum Kämpfer des Rohres.

Erfindungsgemäß ist weiterhin eine Vorrichtung zum Erzeugen einer Rohrbettung vorgesehen, umfassend eine Vorschubeinrichtung, welche mit einem Profilierschild verbunden oder verbindbar ist, wobei das Profilierschild eine Außenkontur aufweist, die im wesentlichen der Außenkontur eines Rohres zumindest in dem Bereich, in welchem das Rohr die Rohrbettung kontaktiert, entspricht, und wobei das Profilierschild in seinem untersten, der Rohrbettung zugewandten Bereich zumindest einen Vorsprung aufweist, um in der Rohrbettung in Längsrichtung des zu verlegenden Rohres eine Rinne auszubilden. Somit werden vorteilhafterweise Spannungs- bzw. Kraft- bzw. Druck-Spitzen auf das Rohr in seinem untersten Bereich nach dessen Verlegen und Verfüllen des Grabens vermieden, da die Rohrbettung im Bereich der Rinne eine geringe Kraft auf das Rohr ausübt. Nach Einlegen des Rohres in die Rohrbettung und Verfüllung setzt sich die Rohrbettung um einen gewissen Grad, und zwar soweit, daß die Rohrbettung im Bereich der Rinne ebenfalls an dem Rohr anliegt, aber eine wesentlich geringere Kraft auf dieses ausübt, da dieser Bereich der Rohrbettung geringfügiger komprimiert wird.

Das Profilierschild kann bevorzugterweise jede der im Zusammenhang mit dem Verfahren zur Herstellung einer Rohrbettung beschriebene Form, Größe oder Konfiguration aufweisen.

Weitere Aufgaben, Merkmale und Vorteile der vorliegenden Erfindung ergeben sich aus der nachfolgenden beispielhaften Beschreibung von bevorzugten Ausführungsformen der vorliegenden Erfindung und zwar im Bezug auf die beigefügten Zeichnungen.

Fig. 1 zeigt schematisch eine Rohrbettung im nicht bearbeiteten Zustand.

Fig. 2 zeigt schematisch den Schritt des Ausbildens der Rohrbettung.

Fig. 3 zeigt schematisch die ausgebildete Rohrbettung.

Fig. 4 zeigt schematisch die Rohrbettung mit eingelegtem Rohr.

Figs. 5a und 5b zeigen die Belastungs- bzw. Spannungsverteilung auf ein Rohr bei einer herkömmlichen Rohrbettung und bei einer Rohrbettung gemäß der vorliegenden Erfindung.

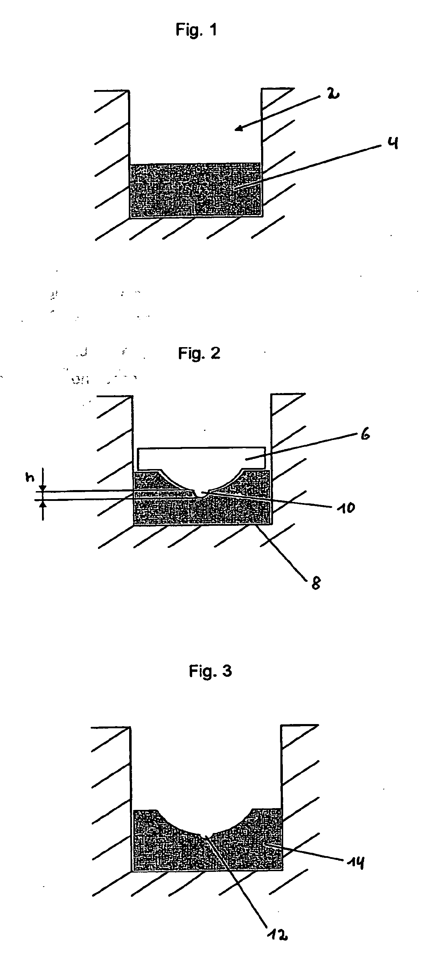

Wie in Fig. 1 schematisch gezeigt, wird bei dem erfindungsgemäßen Verfahren zunächst in herkömmlicher Weise ein Graben 2 ausgehoben. Anschließend wird ein Teil des ausgehobenen Bodens oder auch ein Teil des sich noch im Graben befindenden Bodens entsprechend der geforderten Qualität der Rohrbettung aufbereitet. Jedoch kann auch ein alternatives Bodenmaterial 4, wie z.B. Sand oder ähnliches, in den Graben 2 eingebracht werden. Bei besonders geeigneten Böden ist es ebenfalls möglich, die Rohrbettung direkt darin auszubilden, ohne den Boden vorher aufzubereiten oder ein alternatives Bodenmaterial im Graben einzubringen

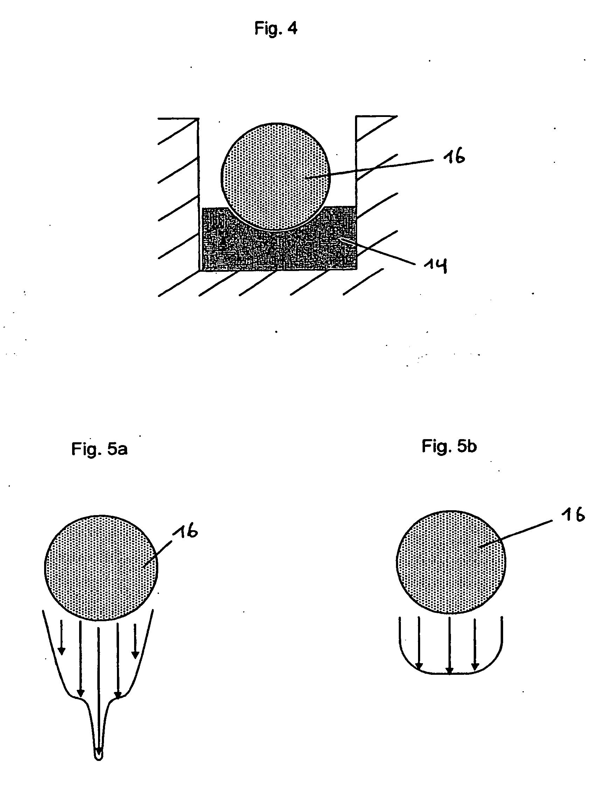

Wie in Fig. 2 schematisch dargestellt, wird in den Graben 2 ein Profilierschild 6 eingebracht, um eine gewünschte Rohrbettung 14 entsprechend der Außenkontur eines zu verlegenden Rohres 16 (siehe Fig. 4) auszubilden. Das Profilierschild 6 bildet dabei eine Schablone, welche in Grabenlängsrichtung, d.h. in Längsrichtung des zu verlegenden Rohres 16, über das aufbereitete und verdichtete Bodenmaterial 4 geführt wird. Hierbei bildet ein Abschnitt des Profilierschilds 6, welcher im wesentlichen der Außenkontur des Rohrs 16 zumindest in dem Bereich entspricht, in welchem das Rohr 16 die Rohrbettung 14 kontaktiert, in dem Bodenmaterial 4 eine Rohrbettung 14 in Form einer Mulde oder Vertiefung aus, die der Außenkontur des zu verlegenden Rohres 16 entspricht. Hierbei wird das Profilierschild 6 mit Bezug zu Fig. 2 senkrecht zur Zeichnungsebene bewegt. An seiner der Grabensohle 8 zugewandten Seite weist das Profilierschild 6 einen Vorsprung 10 auf, welcher beim Ausbilden der Mulde eine Rinne 12 in der nun ausgebildeten Rohrbettung 14 hinterläßt (siehe Fig. 3).

Hierbei weist der Vorsprung 10 eine Höhe h auf, welche in einem Bereich zwischen dem 0,00- bis 0,05-fachen des Radius des Rohres liegt, bzw. im wesentlichen halb so groß ist, wie das Setzungsmaß des Materials der Rohrbettung 14. Weist das Material der Rohrbettung 14 beispielsweise ein Setzungsmaß von 24 mm auf, so ergibt sich für den Vorsprung 10 eine Höhe h von 12 mm. Dies führt dazu, daß sich beim Einlegen des Rohres 16 und anschließendem Verfüllen des Grabens 2 die Rohrbettung 14 bzw. das Rohr 16 absenkt bzw. setzt. Da das Setzungsmaß größer als die Höhe h des Vorsprungs 10 ist, verschwindet nach Beendigung des Setzungsvorganges des Rohres 16 die Rinne 12, wie aus Fig. 4 ersichtlich.

Da jedoch der Bereich der Rohrbettung 14 der Rinne 12 anfangs nicht komprimiert wird bis das Rohr 16 auch die Rohrbettung 14 im Bereich der Rinne 12 kontaktiert und, übt die Rohrbettung 14 nach Beendigung des Setzungsvorgangs des Bodenmaterials 4 im Bereich der Rinne 12 auf das Rohr 16 eine geringere Kraft aus als bei einer herkömmlichen Rohrbettung ohne Rinne 12. Somit ergibt sich für die erfindungsgemäße Rohrbettung 14 eine deutlich gleichmäßigere und geringere Kraft- bzw. Spannungsverteilung auf das Rohr 16 (siehe Fig. 5b) als bei einer herkömmlichen Rohrbettung, welche am untersten Punkt des Rohrs 16 eine sehr hohe Kraft bzw. Spannung in Form eines lokalen Maximums ausübt, die letztlich eine Spannungsspitze im Rohr zur Folge hat, wie dies in Fig. 5a gezeigt ist.

### Bezugszeichenliste

- 2: Graben
- 4: Bodenmaterial
- 6: Profilierschild
- 8: Grabensohle
- 10: Vorsprung
- 12: Rinne
- 14: Rohrbettung
- 16: Rohr
- h: Höhe

## Patentansprüche

1. Verfahren zur Herstellung einer Rohrbettung, umfassend folgende Schritte:
Ausheben eines Grabens (2),
Erzeugen einer Rohrbettung (14) durch Profilieren des Bodens mit einem Profilierschild (6), welches eine Außenkontur aufweist, die im wesentlichen der Außenkontur eines Rohres (16) zumindest in dem Bereich, in welchem das Rohr (16) die Rohrbettung (14) kontaktiert, entspricht,
**dadurch gekennzeichnet, dass** das Profilierschild (6) in seinem untersten, der Rohrbettung (14) zugewandten Bereich zumindest einen Vorsprung (10) aufweist, um in der Rohrbettung (14) in Längsrichtung des zu verlegenden Rohres (16) eine Rinne (12) auszubilden.

2. Verfahren zur Herstellung einer Rohrbettung nach Anspruch 1, bei welchem der Vorsprung (10) eine quer zur Längsrichtung des Rohres (16) verlaufende Höhe h aufweist, welche in einem Bereich zwischen dem 0,001- bis 0,05-fachen des Radius des Rohres (16) liegt.

3. Verfahren zur Herstellung einer Rohrbettung nach einem der vorhergehenden Ansprüche, bei welchem der Vorsprung (10) eine quer zur Längsrichtung des Rohres (16) verlaufende Höhe h aufweist, welche im wesentlichen halb so groß ist, wie das Setzungsmaß des Materials der Rohrbettung (14).

4. Verfahren zur Herstellung einer Rohrbettung nach einem der vorhergehenden Ansprüche, bei welchem der Vorsprung (10) im wesentlichen halbkreisförmig ausgebildet ist bzw. eine gekrümmte Konfiguration aufweist.

5. Verfahren zur Herstellung einer Rohrbettung nach einem der vorhergehenden Ansprüche, bei welchem das Profilierschild (6) wenigstens ein weiteres Paar Vorsprünge aufweist, welche insbesondere symmetrisch zum ersten Vorsprung (10) angeordnet sind.

6. Verfahren zur Herstellung einer Rohrbettung nach einem der vorhergehenden Ansprüche, bei welchem das Profil der Rohrbettung (14) einen Auflagewinkel für das zu verlegende Rohr (16) von mindestens 90° bildet.

7. Vorrichtung zum Erzeugen einer Rohrbettung, umfassend
ein Profilierschild (6),
eine Vorschubeinrichtung, welche mit dem Profilierschild (6) verbunden oder verbindbar ist,
wobei das Profilierschild (6) eine Außenkontur aufweist, die im wesentlichen der Außenkontur eines Rohres (16) zumindest in dem Bereich, in welchem das Rohr (16) die Rohrbettung (14) kontaktiert, entspricht,
**dadurch gekennzeichnet, dass** das Profilierschild (6) in seinem untersten, der Rohrbettung (14) zugewandten Bereich zumindest einen Vorsprung (10) aufweist, um in der Rohrbettung (14) in Längsrichtung des zu verlegenden Rohres (16) eine Rinne (12) auszubilden.

## Claims

1. Method for providing a bedding for pipes, comprising the following steps:
excavating a trench (2),
producing a bedding (14) for pipes by profiling the soil with a profiling shield (6) which has an outer contour which essentially corresponds to the outer contour of a pipe (16) at least in the region in which the pipe (16) contacts the bedding (14) for pipes,
**characterized in that** the profiling shield (6) has at least one projection (10) in its lowermost region facing the bedding (14) for pipes in order to form a channel (12) in the bedding (14) for pipes in the longitudinal direction of the pipe (16) to be laid.

2. Method for providing a bedding for pipes according to Claim 1, in which the projection (10) has a height h which runs transversely to the longitudinal direction of the pipe (16) and is within a range of between 0.001 to 0.05 times the radius of the pipe (16).

3. Method for providing a bedding for pipes according to one of the preceding claims, in which the projection (10) has a height h which runs transversely to the longitudinal direction of the pipe (16) and is essentially half as large as the settlement dimension of the material of the bedding (14) for pipes.

4. Method for providing a bedding for pipes according to one of the preceding claims, in which the projection (10) is of essentially semicircular design or has a curved configuration.

5. Method for providing a bedding for pipes according to one of the preceding claims, in which the profiling shield (6) has at least one further pair of projections which are arranged in particular symmetrically to the first projection (10).

6. Method for providing a bedding for pipes according to one of the preceding claims, in which the profile of the bedding (14) for pipes forms a bearing angle of at least 90° for the pipe (16) to be laid.

7. Device for providing a bedding for pipes, comprising a profiling shield (6) and a feed device which is connected or can be connected to the profiling shield (6),
the profiling shield (6) having an outer contour which essentially corresponds to the outer contour of a pipe (16) at least in the region in which the pipe (16) contacts the bedding (14) for pipes,
**characterized in that** the profiling shield (6) has at least one projection (10) in its lowermost region facing the bedding (14) for pipes in order to form a channel (12) in the bedding (14) for pipes in the longitudinal direction of the pipe (16) to be laid.

## Revendications

1. Procédé pour fabriquer un lit de pose pour tuyauteries, comportant les étapes suivantes :
creuser une tranchée (2),
élaborer un lit de pose pour tuyauteries (14) par profilage du sol avec un bouclier de profilage (6) qui présente un contour extérieur correspondant essentiellement au contour extérieur d'une tuyauterie (16) au moins dans la zone dans laquelle la tuyauterie (16) contact le lit de pose pour tuyauteries (14),
**caractérisé en ce que** le bouclier de profilage (6) présente, dans sa zone la plus en bas et tournée vers le lit de pose pour tuyauteries (14), au moins une saillie (10) pour réaliser une rigole (12) dans le lit de pose pour tuyauteries (14) dans la direction longitudinale de la tuyauterie à poser (16).

2. Procédé pour fabriquer un lit de pose pour tuyauteries selon la revendication 1, dans lequel la saillie (10) présente une hauteur h s'étendant perpendiculairement à la direction longitudinale de la tuyauterie (16), laquelle se trouve dans une plage entre 0,001 et 0,005 fois le rayon de la tuyauterie (16).

3. Procédé pour fabriquer un lit de pose pour tuyauteries selon l'une des revendications précédentes, dans lequel la saillie (10) présente une hauteur « h » s'étendant perpendiculairement à la direction longitudinale de la tuyauterie (16), laquelle est sensiblement à moitié moins grande que la mesure de tassement du matériau du lit de pose pour tuyauteries (14).

4. Procédé pour fabriquer un lit de pose pour tuyauteries selon l'une des revendications précédentes, dans lequel la saillie (10) est réalisée sensiblement en forme de demi-cercle ou présente une configuration courbée.

5. Procédé pour fabriquer un lit de pose pour tuyauteries selon l'une des revendications précédentes, dans lequel le bouclier de profilage (6) présente au moins une autre paire de saillies qui sont agencées en particulier symétriquement par rapport à la première saillie (10).

6. Procédé pour fabriquer un lit de pose pour tuyauteries selon l'une des revendications précédentes, dans lequel le profil du lit de pose pour tuyauteries (14) forme un angle d'appui d'au moins 90° pour la tuyauterie à poser (16).

7. Dispositif pour générer un lit de pose pour tuyauteries, comportant
un bouclier de profilage (6)
un dispositif d'avance qui est relié ou qui peut être relié avec le bouclier de profilage (6),
sachant que le bouclier de profilage (6) présente un contour extérieur correspondant essentiellement au contour extérieur d'une tuyauterie (16) au moins dans la zone dans laquelle la tuyauterie (16) contact le lit de pose pour tuyauteries (14),
**caractérisé en ce que** le bouclier de profilage (6) présente, dans sa zone la plus en bas et tournée vers le lit de pose pour tuyauteries (14), au moins une saillie (10) pour réaliser une rigole (12) dans le lit de pose pour tuyauteries (14) dans la direction longitudinale de la tuyauterie à poser (16).
